# EUROPEAN PATENT SPECIFICATION

(11) **EP 1 058 080 B1**
(45) Date of publication and mention of the grant of the patent: **11.08.2004**
(21) Application number: 00111559.1
(22) Date of filing: 30.05.2000
(51) Int. Cl.: F28D 1/053, F28F 9/02

(54) **Heat exchanger**
Wärmetauscher
Echangeur de chaleur

(30) Priority: 31.05.1999 JP 15302599
(43) Date of publication of application: 06.12.2000
(73) Proprietor: Mitsubishi Heavy Industries, Ltd., Tokyo (JP)
(72) Inventor: Watanabe, Yoshinori, Mitsubishi Heavy Ind., Ltd., Nogoya-shi, Aich-ken (JP); Akimoto, Ryousaku, Mitsubishi Heavy Ind., Ltd., Nishi-kasugai-gun, Aichi-ken (JP)
(74) Representative: Henkel, Feiler & Hänzel

(56) References cited:
- EP-A- 0 501 736
- EP-A- 0 851 188
- WO-A-99/23432
- DE-U- 8 805 401
- US-A- 5 097 891
- US-A- 5 400 853

## Description

### BACKGROUND OF THE INVENTION

### Field of the Invention

This invention relates to heat exchangers as defined by the preamble portion of claim 1 which are installed in air conditioners used for vehicles. Such a heat exchanger is known for instance from US-A-5 097 891.

This application is based on Patent Application No. Hei 11-153025 filed in Japan.

### Description of the Related Art

In general, vehicles are equipped with air conditioners to cool or warm the air therein. The air conditioners are equipped with heat exchanger units that cool or warm the air circulating in the vehicles.

The heat exchanger units are normally used for evaporators or heaters. Herein, the evaporators have evaporating functions to cool down the air by exchanging heat between the air and refrigerant flowing in refrigerant circulation systems. The heaters warm the air by exchanging heat between the air and cooling water flowing in cooling water circulation systems for engines.

Recently, people tend to have high environmental awareness with regard to various environmental issues. As one solution against the pollution of the environment, electric cars attract a great deal of attention of engineers and scientists. The electric cars install electric motors as driving power sources instead of internal-combustion engines. So, the electric cars are capable of traveling in a clean manner without producing exhaust gas that is one cause of the air pollution.

One major problem in development of the air conditioners installed in the electric cars is incapability of using cooling water of engines, which is conventionally used as heat sources for the heaters of the air conditioners. To cope with such a disadvantage, engineers propose to use air conditioners of the heat-pump type. In order to facilitate the air conditioners of the heat-pump type, it is necessary to reform the heat exchangers (particularly, evaporators) in structure. That is, the heat exchangers which are conventionally used as evaporators for cooling down the air are restructured to act as heaters that warm up the air as well.

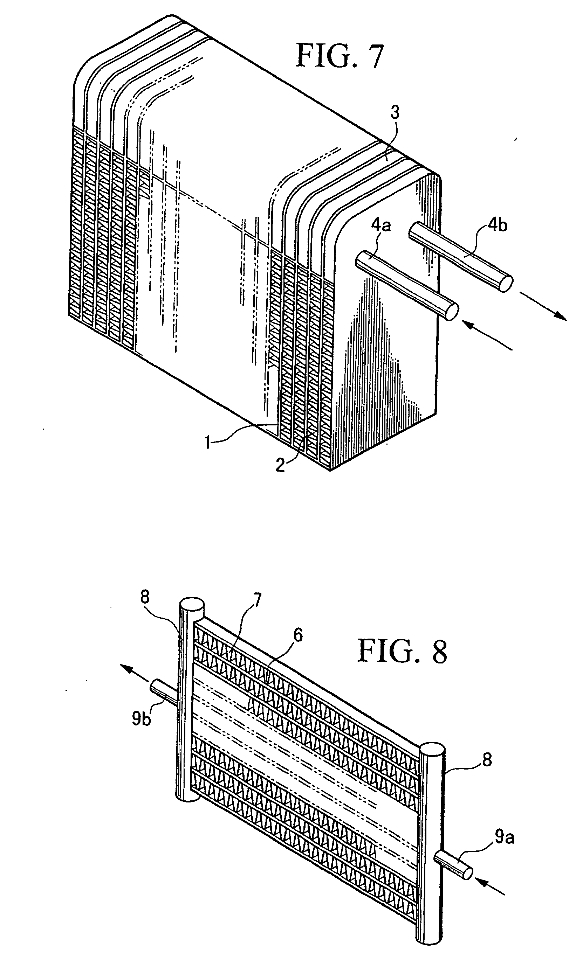

FIG. 7 diagrammatically shows an outline structure of an evaporator conventionally used. That is, the evaporator of FIG. 7 is mainly constructed by plate tubes 1, cooling fins 2 and headers 3 as well as a refrigerant inlet pipe 4a and a refrigerant outlet pipe 4b. Each of the plate tubes 1 is constructed by two sheets of plates, which are arranged tightly and closely with each other and between which a U-shaped refrigerant passage is formed. So, refrigerant flows up and down in the U-shaped refrigerant passage in a reciprocating manner. In addition, the plate tubes 1 are arranged in parallel with each other by way of equal spacing therebetween. Further, the cooling fins 2 are adhered to the plate tubes 1 respectively in such a manner that each of the cooling fins is sandwiched between two plate tubes. The headers 3 are located on upper portions of the plate tubes 1 to provide spaces being communicating with refrigerant passages respectively. So, refrigerant is introduced from the refrigerant inlet pipe 4a into the spaces of the headers 3, from which the refrigerant is distributed to the plate tubes 1 respectively. In addition, refrigerant that circulated in the plate tubes 1 and is output from the plate tubes 1 respectively is collected by the headers 3, from which the refrigerant is exhausted by way of the refrigerant outlet pipe 4b.

. The evaporator having the aforementioned structure needs relatively low pressure for the refrigerant circulating in the plate tubes 1. For this reason, the evaporator does not normally have a high pressure-proof strength against high-pressure and high-temperature refrigerant, which is normally used in the condenser (i.e., heater). Therefore, the aforementioned evaporator cannot be used as the condenser.

Some of the air conditioners used for the vehicles are equipped with condensers that condense and liquefy refrigerant by exchanging heat between the refrigerant circulating in refrigerant circulation systems and external air outside of the vehicles.

FIG. 8 diagrammatically shows a condenser conventionally used. That is, the condenser of FIG. 8 is constructed by flat tubes 6 used for refrigerant passages, cooling fins 7 and headers 8 as well as a refrigerant inlet pipe 9a and a refrigerant outlet pipe 9b. The flat tubes 6 are horizontally arranged between the headers 8 and are held at different locations, which differ from each other in elevation by prescribed intervals of distance therebetween. In addition, the cooling fins 7 are arranged in connection with the flat tubes 6 in such a manner that each of the cooling fins is sandwiched between two flat tubes. Herein, the cooling fins 7 are bonded together with the flat tubes 6 by brazing. The headers 8 have spaces communicating with the refrigerant passages formed inside of the flat tubes 6. So, refrigerant is introduced from the refrigerant inlet pipe 9a into one header 8 (illustrated at a right side in FIG. 8), by which the refrigerant is distributed to the flat tubes 6 respectively. In addition, refrigerant that circulate in the flat tubes 6 and is output from the flat tubes 6 is collected by another header 8 (illustrated at a left side in FIG. 8), by which the refrigerant is exhausted by way of the refrigerant outlet pipe 9b.

By installing the condenser having the aforementioned structure in the air conditioner of the vehicle, it is possible to demonstrate condensing functions effectively. However, if the condenser is used as the evaporator, the condenser functions to cool humid components of the air so that condensed water is attached to surfaces of the cooling fins, then, the condensed water enter into gaps of the cooling fins. In that case, it is difficult to remove the condensed water from inside areas of the cooling fins. In addition, there is a problem in which the condensed water prevent the air from circulating among the cooling fins so that heat-exchange capability should be reduced.

As described above, it is impossible to use the evaporator and condenser, conventionally used for the air conditioner of the vehicle, directly for the air conditioner of the heat-pump type being installed in the electric car. In short, it is demanded to develop a specially designed heat exchanger that has a new structure being used for the air conditioner installed in the electric car.

A prior art heat exchanger for an air conditioner intended for use in a vehicle with the features of the preamble portion of claim 1 is described in US-A-5 097 891. This document describes a heat exchanger that has two spaced apart top and bottom manifolds and a midway manifold connected by tubes. The refrigerant in this heat exchanger flows parallel from the top manifold through the tubes to the bottom manifold. The refrigerant flowing through the centre portion of reduced dimension due to the midway manifold is collected in the midway manifold and coupled to the bottom our outlet manifold via separate conduits. Thus, this refrigerant does not contribute to the heat exchange process after having been collected in the midway manifold.

### SUMMARY OF THE INVENTION

It is an object of the present invention to provide a heat exchanger that provides a flexible layout and effective heat exchange efficiericy.

According to the present invention a heat exchanger is provided as defined in claim 1. Preferred embodiments are defined in the dependent claims.

A heat exchanger of this invention is used for an air conditioner installed in a vehicle such as an electric car and is basically designed as a laminated type, which is constructed by assembling a pair of he at-exchanger units together. Herein, each of the heat-exchanger units is constructed by a pair of headers, which are arranged in parallel with each other in a vertical direction and between which tubes and cooling fins are alternately arranged along a horizontal direction. Herein, each of the tubes and each of the cooling fins are extended in a vertical direction between the headers. Partition plates are arranged inside of the headers at selected positions such that an overall front area in which the tubes and cooling fins are alternately arranged between the headers is divided into a number of parts, among which refrigerant sequentially flow from one part to another in a reciprocating manner. Herein, all the parts can be equally divided to have a same sectional area, or they are gradually changed (i.e., reduced or enlarged) in sectional area along a refrigerant flow direction corresponding to the horizontal direction by which the refrigerant flow among the parts.

It is possible to change an overall front shape of the heat exchanger, which is originally a rectangular shape, to a prescribed shape such as an L-shape and a U-shape, by which the heat exchanger is arranged not to interfere with some device or equipment inside of the vehicle. For example, an intermediate header is arranged in parallel with the header and is located at an intermediate position in elevation between the headers, so tubes and cooling fins are correspondingly arranged in connection with the intermediate header.

### BRIEF DESCRIPTION OF THE DRAWINGS

These and other objects, aspects and embodiments of the present invention will be described in more detail with reference to the following drawing figures, of which:
FIG. 1 is a perspective view showing an outline of a construction of a heat exchanger which is designed as a laminated type in accordance with certain aspects of the invention;
FIG. 2 is an expanded flow diagram showing refrigerant circulation paths being formed inside of heat-exchanger units A, B which are assembled together;
FIG. 3 is a perspective view showing an outline of a construction of a heat exchanger which is designed as a laminated type in accordance with an embodiment of the invention;
FIG. 4 is an expanded flow diagram showing refrigerant circulation paths being formed inside of heat-exchanger units A, B which are assembled together by way of intermediate headers;
FIG. 5A is an enlarged perspective view partly in section showing a selected upper-right part of a heat exchanger which is designed in accordance with a further embodiment of the invention;
FIG. 5B is a simplified sectional illustration showing internal pipes being inserted into headers;
FIG. 6A is an enlarged perspective view partly in section showing the selected upper-right part of the heat exchanger of FIG. 5A, which is modified to replace the internal pipes with partition boards;
FIG. 6B is a simplified sectional illustration showing the partition boards being inserted into the headers;
FIG. 7 is a perspective view showing an example of an evaporator conventionally used; and
FIG. 8 is a perspective view showing an example of a condenser conventionally used.

### DESCRIPTION OF THE PREFERRED EMBODIMENTS

This invention will be described in further detail by way of examples with reference to the accompanying drawings.

### [A] First Example

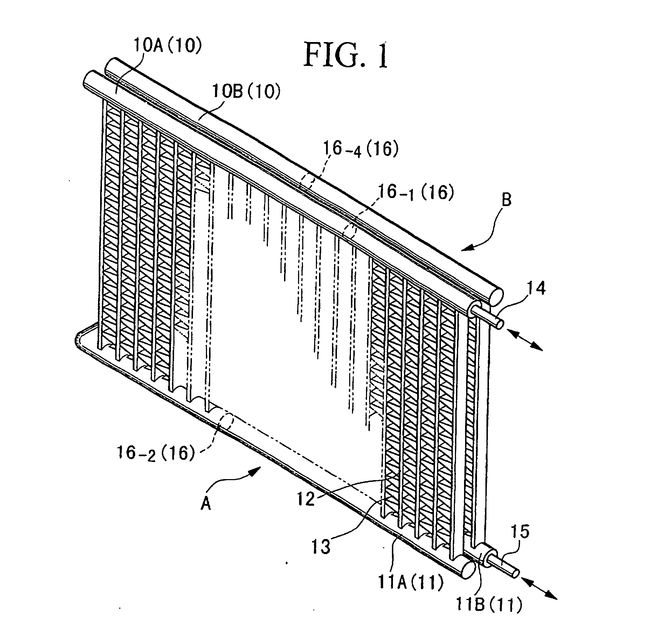

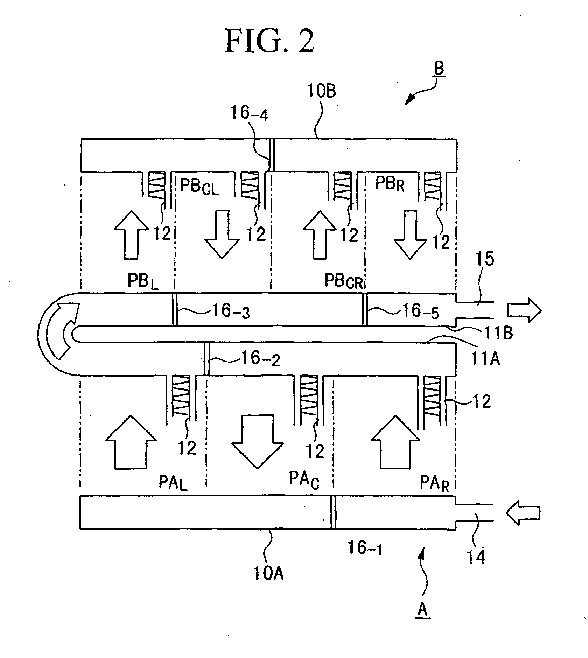

Now, a heat exchanger that is designed in accordance with certain aspects of the invention will be described with reference to Figures 1 and 2.

The heat exchanger of the first example is basically designed as a heat exchanger of a laminated type, which is constructed by assembling two heat-exchanger units A, B of a parallel flow type together. Each of the heat-exchanger units A, B is constructed by a pair of headers 10, 11, tubes 12 and cooling fins 13. Herein, the headers 10, 11 are located vertically apart from each by a prescribed interval of distance and are arranged in parallel with each other in elevation. In addition, the tubes 12 and the cooling fins 13 are arranged between the headers 10, 11 in a horizontal direction and alternately with each other such that one cooling fin is sandwiched between two tubes. Further, both ends of the tubes 12 communicate with internal spaces of the headers 10, 11 respectively. Thus, refrigerant passages formed insides of the tubes 12 are interconnected together with respect to each of the heat-exchanger units A, B, which are interconnected together by the headers 11 (i.e., 11A, 11B, see FIG. 2). As a result, refrigerant flows through refrigerant circulation paths, which are formed in the heat-exchanger units A, B respectively and are interconnected together, so that the refrigerant sequentially circulates through the heat-exchanger units A, B.

Each of the headers 10, 11 is constructed by a seamless pipe having a circular sectional shape. Both ends of the header are closed by terminal plates each having a circular shape. Each of the tubes 12 has a flat shape whose width is shorter than a diameter of the header and is made by a porous extrusion tube containing passages being partitioned in a width direction thereof. Ends of the tube 12 are inserted into insertion holes (not shown) respectively formed on the headers 10, 11 at selected positions, and are adhered to the headers 10, 11 respectively by brazing. So, refrigerant introduced into the headers 10, 11 is distributed to the tubes 12 respectively. Each of the cooling fins 13 is made by bending a band-shaped plate material to be corrugated with waves. So, the cooling fins 13 are arranged in connection with the tubes 12 such that crest portions of the "corrugated" cooling fin 13 are brought into contact with and bonded together with its adjacent tubes by brazing.

Substantially, no difference in appearance is provided between the heat-exchanger units A, B. Concretely speaking, the heat-exchanger unit A is constructed using a pair of an upper header 10A and a lower header 11A between which the tubes and cooling fins are arranged, while the heat-exchanger unit B is constructed using a pair of an upper header 10B and a lower header 11B between which the tubes and cooling fins are arranged. Herein, a refrigerant inlet/outlet pipe 14 is provided to communicate with one end of the header 10A of the heat-exchanger unit A, while a refrigerant . inlet/outlet pipe 15 is provided to communicate with one end of the header 11B of the heat-exchanger unit B. In addition, the lower headers 11A, 11B of the heat-exchanger units A, B are interconnected with each other with prescribed ends thereof to communicate with each other with internal spaces thereof.

FIG. 2 shows an layout of the refrigerant circulation paths being formed in the heat-exchanger units A, B. To clearly show the refrigerant circulation paths, FIG. 2 shows an expanded flow diagram of the heat-exchange units A, B.

As shown in FIG. 2, a number of partition plates 16 (specifically, 16-1 to 16-5) are arranged at selected positions inside of the headers 10A, 11A, 10B, 11B. By provision of the partition plates 16, the refrigerant circulation paths are arranged such that refrigerant will flow between the headers 10A, 11A (or between the headers 10B, 11B) in a reciprocating manner.

Next, operations of the heat-exchanger units A, B will be described with respect to refrigerant that flows through the refrigerant circulation paths.

In FIG. 2, an overall area of the heat-exchanger unit A is equally divided into three sections, namely, a right part PA_{R}, a center part PA_{C} and a left part PA_{L}, each of which occupies a one-third (1/3) area. In addition, an overall area of the heat-exchanger unit B is equally divided into four sections, namely, a right part PB_{R}, a center-right part PB_{CR}, a center-left PB_{CL} and a left part PB_{L}, each of which occupies a one-fourth (1/4) area.

Now, refrigerant is introduced into the upper header 10A of the heat-exchanger unit A by way of the refrigerant inlet/outlet pipe 14. In the upper header 10A, the refrigerant is blocked by the partition plate 16-1, so that the refrigerant is distributed to the tube s 12 belonging to the right part PA_{R} of the heat-exchanger unit A. Herein, the distributed refrigerant flows through the tubes 12 of the right part PA_{R} and is then output toward the lower header 11A. In the lower header 11A, the refrigerant is blocked by the partition plate 16-2, so the refrigerant is distributed to the tubes 12 belonging to the center part PA_{C} of the heat-exchanger unit A. The distributed refrigerant flows through the tubes 12 of the center part PA_{C} and is then output toward the upper header 10A. Then, the refrigerant is blocked by the closed end of the upper header 10A, so the refrigerant is distributed to the tubes 12 belonging to the left part PA_{L} of the heat-exchanger unit A. The distributed refrigerant flows through the tubes 12 of the left part PA_{L} and is then output toward the lower header 11A.

Because the lower header 11A of the heat-exchanger unit A is interconnected with the lower header 11B of the heat-exchanger unit B, the refrigerant output from the tubes 12 of the left part PA_{L} of the heat-exchanger unit A is forced to flow from the lower header 11A to the lower header 11B. That is, the refrigerant output from the heat-exchange unit A is input to the heat-exchange unit B by way of the lower headers 11A, 11B which are interconnected with each other. In the lower header 11B, the refrigerant is blocked by the partition plate 16-3, so the refrigerant is distributed to the tubes 12 belonging to the left part PB_{L} of the heat-exchanger unit B. The distributed refrigerant flows through the tubes 12 of the left part PB_{L} and is then output toward the upper header 10B. In the upper header 10B, the refrigerant is blocked by the partition plate 16-4, so the refrigerant is distributed to the tubes 12 belonging to the center-left part PB_{CL} of the heat-exchanger unit B. The distributed refrigerant flows through the tubes 12 of the center-left part PB_{CL} and is then output toward the lower header 11B. In the lower header 11B, the refrigerant is blocked by the partition plate 16-5, so the refrigerant is distributed to the tubes 12 belonging to the center-right part PB_{CR}. The distributed refrigerant flow through the tubes 12 of the center-right part PB_{CR} and is then output toward the upper header 10B. Then, the refrigerant is blocked by the closed end of the upper header 10B, so the refrigerant is distributed to the tubes 12 belonging to the right part PB_{R}. The distributed refrigerant flows through the tubes 12 of the right part PB_{R} and is then output toward the lower header 11B. Thereafter, the refrigerant is forced to be output by way of the refrigerant inlet/outlet pipe 15 connected with the lower header 11B of the heat-exchanger unit B.

As described before, each of the headers 10A, 11A, 10B, 11B is constructed by the seamless pipe, while each of the tubes 12 is constructed by the porous extrusion tube. Thus, the heat exchanger of the first example is capable of improving a pressure-proof strength entirely. In addition, the heat exchanger is designed such that the tubes 12 are arranged in a vertical direction. Therefore, when the heat exchanger is used as an evaporator, condensed water attached to surfaces of the cooling fins 13 drop downwardly with ease by way of the tubes 12 being vertically arranged. Thus, it is possible to effectively remove the condensed water from interior gaps of the cooling fins 13.

Generally speaking, the electric cars are limited in spaces being secured for installation of air conditioners because they are equipped with specially designed devices and mechanisms, which differ from conventional devices and mechanisms being installed in general cars equipped with internal-combustion engines. The present example is designed to cope with limitation in space for installation of the air conditioner in the electric car. That is, the present example provides a laminated type of the heat exchanger, in which the heat-exchanger units A, B are arranged closely with each other in a laminated manner and which is easily installed in the electric car. So, it is possible to obtain a desired heat-exchange capability while reducing an overall volume of the heat exchanger of the laminated type.

By arranging partition plates 16 in the headers 10, 11 at the prescribed positions, it is possible to freely set and arrange the refrigerant circulation paths in the heat exchanger. When the aforementioned heat exchanger is installed in the air conditioner, it is possible to freely design layouts for the refrigerant circulation paths by changing (e.g., increasing) a number of the parts being arranged in the heat exchanger in accordance with various conditions.

FIG. 2 merely shows one example of the layout for the refrigerant circulation paths, in which total seven parts are arranged in the heat exchanger having the prescribed refrigerant circulation paths, wherein the heat-exchanger unit A is arranged in an upstream side while the heat-exchanger unit B is arranged in a downstream side. That is, an overall area for arranging the tubes 12 in the heat-exchanger unit A is divided into three parts, while an overall area for arranging the tubes 12 in the heat-exchanger unit B is divided into four parts. As compared with the heat-exchanger unit B, the heat-exchanger unit A has a large number of tubes 12 being allocated to each of the parts. In other words, a sum of sectional areas being measured from the refrigerant circulation paths within one part becomes large in the heat-exchanger unit A corresponding to the upstream side, but it becomes small in the heat-exchanger unit B corresponding to the downstream side. That is, sectional areas of the refrigerant circulation paths become small along a refrigerant flow direction that directs from the upstream side to the downstream side.

In the case of the condenser being designed using the aforementioned heat exchanger, the refrigerant circulating in the condenser is not maintained constantly in dryness. That is, the dryness is gradually reduced in processes for condensation and liquefaction in the condenser. For this reason, if the sectional areas of the refrigerant circulation paths are constantly maintained, regardless of the refrigerant flow direction, refrigerant pressures are increased in the upstream side but are decreased in the downstream side. Therefore, if the condenser is designed using the heat exchanger in which sectional areas of refrigerant circulation paths are maintained constantly in all parts, it may be difficult to produce a high heat transfer rate, and it may be difficult to reduce pressure loss. Because, the pressure loss becomes large in the upstream side in which refrigerant has a high degree of dryness and a high pressure, while the heat transfer rate becomes small in the downstream side in which refrigerant has a low degree of dryness and a low pressure.

To cope with the aforementioned drawbacks, the heat exchanger of the present example is designed such that as shown in FIG. 2, sums of the sectional areas of the refrigerant circulation paths are gradually reduced along the refrigerant flow direction. Therefore, the present example is capable of changing pressure of the refrigerant in response to variations of the dryness of the refrigerant, namely, it is possible to reduce the pressure in the upstream side, and it is possible to increase the pressure in the downstream side. Thus, it is possible to produce a high heat transfer rate while reducing pressure loss in the heat exchanger as a whole.

In the case of the evaporator which is designed using the aforementioned heat exchanger, the refrigerant circulating in the evaporator is not maintained constantly in dryness. That is, the dryness of the refrigerant is gradually increased in processes for evaporation and gasification in the evaporator. Therefore, if the sectional areas of the refrigerant circulation paths are maintained constant, regardless of the refrigerant flow direction, pressure of the refrigerant is reduced in the upstream side but is increased in the downstream side. As a result, a heat transfer rate is reduced in the upstream side in which the refrigerant has a low degree of dryness and a low pressure, while pressure loss is increased in the downstream side in which the refrigerant has a high degree of dryness and a high pressure.

In the case of the evaporator, the heat exchanger is modified such that the refrigerant is forced to flow in directions reverse to directions shown in FIG. 2. That is, the heat-exchanger unit B is arranged as the upstream side, while the heat-exchanger unit A is arranged as the downstream side. Therefore, sums of the sectional areas of the refrigerant circulation paths are gradually increased along a refrigerant flow direction, which is reverse to the refrigerant flow direction shown in FIG. 2. For this reason, it is possible to change pressure of the refrigerant adequately in response to variations of the dryness of the refrigerant in the evaporator. Namely, it is possible to increase the pressure of the refrigerant in the upstream side, and it is possible to reduce the pressure of the refrigerant in the downstream side. Thus, it is possible to produce a high heat transfer rate while reducing pressure loss in the heat exchanger as a whole.

Incidentally, the first example is designed to change sums of the sectional areas of the refrigerant circulation paths in a two-stage manner between the heat-exchanger units A and B. Of course, it is possible to set three or four stages for changing them by changing arrangement of the partition plates. That is, it is possible to change the sums of the sectional areas of the refrigerant circulation paths in a more precise manner.

### [B] Embodiment

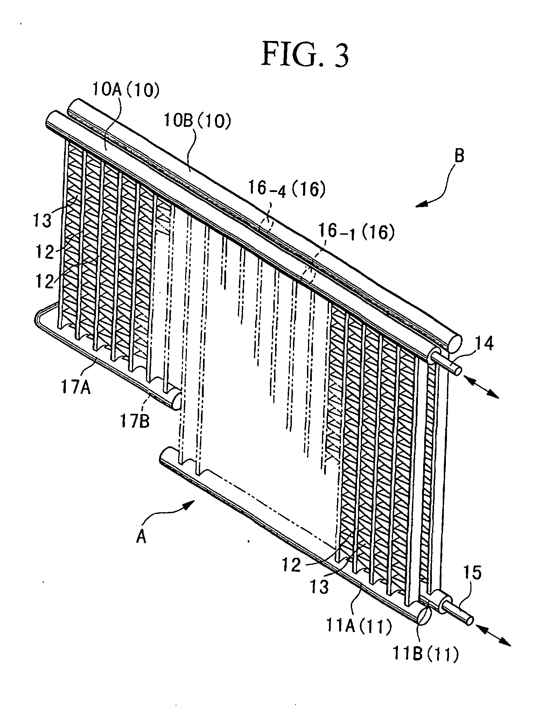

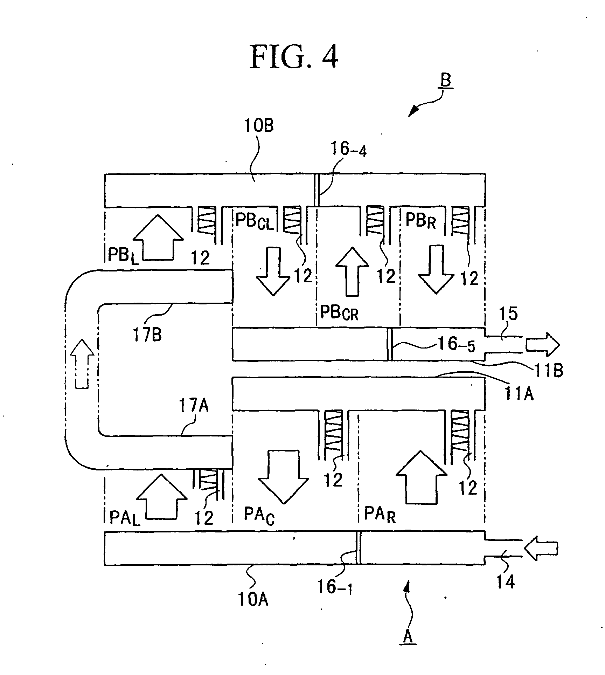

Next, a heat exchanger which is designed in accordance with a embodiment of the invention will be described with reference to Figures 3 and 4, wherein parts equivalent to those shown in Figures 1 and 2 are designated by the same reference numerals, hence, the description thereof will be omitted.

As similar to the first example, the heat exchanger of the embodiment is designed as a laminated type, which is constructed by assembling heat-exchanger units A, B of a parallel-flow type together. As compared with the first example shown in FIG. 1, the embodiment shown in FIG. 3 is characterized by that the heat-exchanger units A, B are shortened by partially cutting out lower headers 11 and their peripheral portions. In the case of the heat-exchanger unit A, the lower header 11A and its peripheral portions are partially cut out. Instead of cut portions regarding the lower header 11A, an intermediate header 17A is provided and arranged in parallel with the upper header 10A. Herein, the intermediate header 17A is located at an intermediate position in elevation between the headers 10A and 11A. In addition, tubes 12 and cooling fins 13 are also arranged between the upper header 10A and the intermediate header 17A. Herein, the tubes 12 and the cooling fins 13 are arranged alternately in a horizontal direction such that one cooling fin is arranged between two tubes.

As similar to the heat-exchanger unit A, the heat-exchanger unit B is equipped with an intermediate header 17B, which is arranged between the upper header 10B and the lower header 11B being partially cut out. In addition, tubes 12 and cooling fins 13 are arranged between the upper header 10B and the intermediate header 17B and are also arranged alternately in a horizontal direction such that one cooling fin is arranged between two tubes.

The intermediate headers 17A, 17B are closed at one end thereof, while they are interconnected with each other by way of other ends thereof. That is, the intermediate headers 17A, 17B are integrally connected together to form a U-shaped refrigerant path shown in FIG. 4. In front view, the heat exchange of the laminated type shown in FIG. 3 roughly has an L shape, which is actualized by partially cutting out the rectangular shape.

FIG. 4 shows overall refrigerant circulation paths being formed in the heat-exchanger units A, B. To clearly illustrate the refrigerant circulation paths, FIG. 4 shows an expanded flow diagram in which the heat-exchanger units A, B are expanded with respect to flows of refrigerant.

In the embodiment, a number of partition plates 16 are arranged in the headers 10A, 11A, 10B, 11B at selected positions shown in FIG. 4.

As similar to the first example shown in FIG. 2, an overall area of the heat-exchanger unit A is equally divided into three sections, namely, a right part PA_{R}, a center part PA_{C} and a left part PA_{L}, each of which occupies a one-third (1/3) area. In addition, an overall area of the heat-exchanger unit B is divided into four sections, namely, a right part PB_{R}, a center-right part PB_{CR}, a center-left part PB_{CL} and a left part PB_{L}. Herein, the left part PB_{L} occupies a one-third (1/3) area, while each of the other parts PB_{R}, PB_{CR} and PB_{CL} occupies a two-ninths (2/9) area.

Now, the heat-exchanger units A, B will be described with respect to the refrigerant circulation paths. At first, refrigerant is introduced into the upper header 10A of the heat-exchanger unit A by way of the refrigerant inlet/outlet pipe 14. In the upper header 10A, the refrigerant is blocked by a partition plate 16-1 and is distributed to the tubes 12 belonging to the right part PA_{R} of the heat-exchanger unit A. The distributed refrigerant flows through the tubes 12 of the right part PA_{R} and is then output toward the lower header 11A. In the lower header 11A, the refrigerant is blocked by its closed end and is forced to flow toward the center part PA_{C} of the heat-exchanger unit A. So, the refrigerant is distributed to the tubes 12 belonging to the center part PA_{C}. The distributed refrigerant flows through the tubes 12 of the center part PA_{C} and is then output toward the upper header 10A. In the upper header 10A, the refrigerant is blocked by the partition plate 16-1 and is forced to flow toward the left part PA_{L}. So, the refrigerant is distributed to the tubes 12 belonging to the left part PA_{L}. As compared with the tubes belonging to the parts PA_{R} and PA_{C}, the tubes belonging to the left part PA_{L} are shortened in legths. The distrubuted refrigerant flows through the tubes 12 of the left part PA_{L} and is then output toward the intermediate header 17A.

That is, the refrigerant flows into the intermediate header 17A, one end of which is closed but another end of which is interconnected with the intermediate header 17B of the heat-exchanger unit B. So, the refrigerant flows through the intermediate headers 17A, 17B sequentially. In the intermediate header 17B whose one end is closed, the refrigerant is forced to flow into the tubes 12 belonging to the left part PB_{L} of the heat-exchanger unit B. So, the refrigerant is distributed to the tubes 12 of the left part PB_{L}. The distributed refrigerant flows through the tubes 12 of the left part PB_{L} and is then output toward the upper header 10B, both ends of which are closed. In the upper header 10B, the refrigerant is blocked by a partition plate 16-4 and is forced to flow toward the center-left part PB_{CL} of the heat-exchanger unit B. So, the refrigerant is distributed into the tubes belonging to the center-left part PB_{CL}. The distributed refrigerant flows through the tubes 12 of the center-left part PB_{CL} and is then output toward the lower header 11B whose one end is closed. In the lower header 11B, the refrigerant is blocked by a partition plate 16-5 and is forced to flow toward the center-right part PB_{CR}. So, the refrigerant is distributed to the tubes 12 belonging to the center-right part PB_{CR}. The distributed refrigerant flows through the tubes 12 of the center-right part PB_{CR} and is then output toward the upper header 10B. In the upper header 10B, the refrigerant is blocked by the partition plate 16-4 and is forced to flow toward the right part PB_{R}. So, the refrigerant is distributed to the tubes 12 of the right part PB_{R}. The distributed refrigerant flows through the tubes 12 of the right part PB_{R} and is then output toward the lower header 11B. In the lower header 11B, the refrigerant is blocked by the partition plate 16-5 and is forced to flow toward the refrigerant inlet/outlet pipe 15. Thus, the refrigerant is output by way of the refrigerant inlet/outlet pipe 15.

As described above, the heat exchanger of the embodiment is characterized by providing the intermediate headers 17A, 17B in connection with the heat-exchanger units A, B respectively. As compared with the foregoing heat exchanger of the parallel-flow type which has a rectangular shape, the embodiment forms the heat exchanger of the parallel-flow type to roughly have an L shape.

As compared with the rectangular shape, the L shape is reduced in total area, in other words, the L shape is able to provide a certain space, which can be used to install some device or equipment of the vehicle.

So, the embodiment has an advantage in application to the electric car which is limited in space for installation of the heat exchanger. That is, even if the electric car does not provide a sufficient space for installation of the heat exchanger, the heat exchanger is modified in shape to avoid interference with other device or equipment. So, the second embodiment is capable of providing the heat exchanger whose shape is modified to enable installation in a limited space, which is narrow and is hard to install the rectangular heat exchanger.

Incidentally, FIG. 3 merely shows one example of the shape being applied to the heat exchanger. That is, the heat exchanger can be further changed in shape by using the aforementioned technique of the second embodiment (e.g., provision of intermediate headers). So, it is possible to construct the heat exchanger to have a prescribed shape such as a U-shape, an E-shape and a step-like shape other than the L-shape.

### [C] Further Embodiment

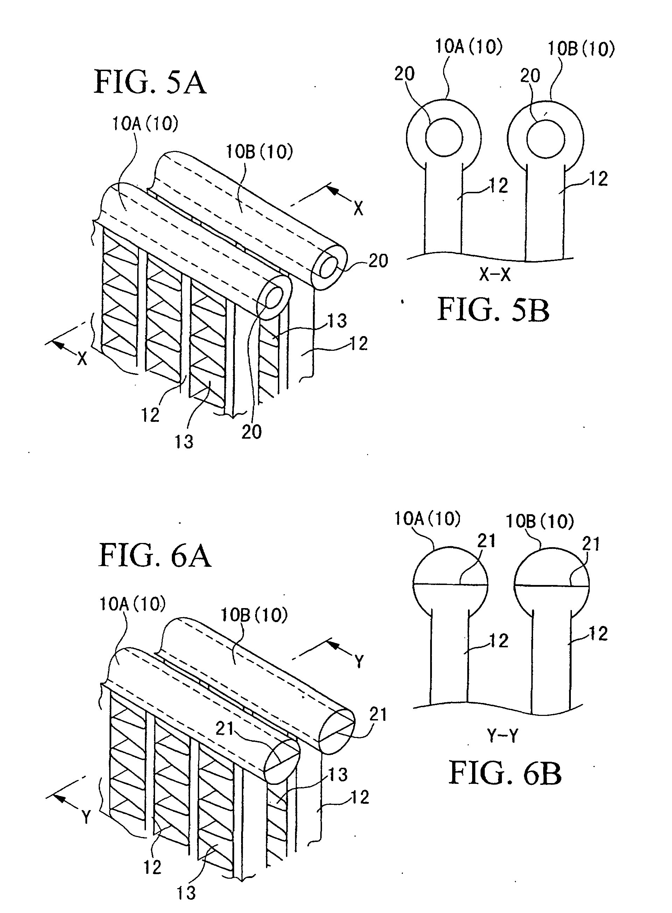

Next, a heat exchanger that is designed in accordance with a further embodiment of the invention will be described with reference to Figures 5A and 5B, wherein parts equivalent to those shown in FIG. 1 are designated by the same reference numerals, hence, the description thereof will be omitted.

FIG. 5A shows a selected part (i.e., an upper-right part) of the heat exchanger of the laminated type, which is constructed by assembling heat-exchanger units A, B together. The further embodiment is characterized in that internal pipes (or space occupation members) 20 each having a circular sectional shape are respectively inserted into the upper headers 10A, 10B in such a way that center axes thereof coincide with center axes of the upper headers 10A, 10B in their length directions. As shown in FIG. 5B, the internal pipes 20 occupy certain areas of the upper headers 10A, 10B in section, but they are isolated from refrigerant passages provided inside of the upper headers 10A, 10B respectively. As similar to the upper headers 10A, 10B, internal pipes are also inserted into the lower headers 11A, 11B respectively, which is not illustrated by figures.

By insertion of the internal pipe 20 in the header, it is possible to reduce the refrigerant passage in volume with respect to each of the headers. That is, the internal pipe 20 prohibits stagnation of refrigerant inside of the header. This increases a circulation efficiency of the refrigerant, so it is possible to reduce a start-up time for starting up an initial operation of the air conditioner. In addition, it is possible to reduce an amount of refrigerant circulating through a refrigerant circulation system of the heat exchanger.

The internal pipe 20 having a circular sectional shape is employed as the space occupation member in consideration of its pressure-proof strength. In the case of the condenser which is constructed using the heat exchanger, high-pressure and high-temperature refrigerant flow into the upper header (i.e., 10A) in the upstream side of the heat exchanger. In that case, the "circularly shaped" internal pipe 20 can demonstrate a sufficiently high pressure-proof strength against the "surrounding" high-pressure refrigerant in the header.

Incidentally, the space occupation member is not necessarily formed like the internal pipe 20. For example, it is possible to provide an elongated partition board 21 being inserted into the header as shown in FIG. 6A. Herein, the partition board 21 is elongated in a length direction of the header. As shown in FIG. 6B, the partition board 21 partitions an internal space of the header into two sections. By using the partition boards 21 being respectively inserted into the headers, it is possible to obtain effects similar to the aforementioned effects being demonstrated by the internal pipes 20 inserted into the headers. However, the partition board 21 is formed by a flat board, which cannot provide a sufficiently high pressure-proof strength against the refrigerant. So, it is necessary to introduce some ideas for strengthening the partition board 21. For example, the partition board 21 is designed to have a sufficiently large thickness, or ribs are provided for reinforcement of the partition board 21.

As described heretofore, this invention has a variety of technical features and effects, which are summarized as follows:
(1) A heat exchange of this invention is basically used for an air conditioner installed in a vehicle and is constructed by a pair of headers which are arranged in parallel with each other in a vertical direction and between which tubes and cooling fins are alternately arranged along a horizontal direction. Herein, each of the tubes is extended vertically, so if the heat exchanger is used as an evaporator, condensed water being attached to surfaces of the cooling fins easily drop down by way of the tubes extended vertically. Therefore, it is possible to efficiently remove the condensed water from internal gaps of the cooling fins. This helps the air to flow between the cooling fins in a good manner, so it is possible to avoid reduction of a heat-exchange capability due to adhesion of the condensed water to the cooling fins.
(2) The heat exchanger is equipped with partition plates, which are arranged inside of the headers at selected positions. By adequately arranging the partition plates, it is possible to freely configure a layout for refrigerant circulation paths within the headers and tubes in response to various conditions of the air conditioner installed in the vehicle.
(3) The heat exchanger is equipped with an intermediate header, which is located at an intermediate position in elevation between the headers and is arranged in parallel with one of the headers, so that tubes and cooling fins are correspondingly arranged in connection with the intermediate header. By providing such an intermediate header, it is possible to change an overall front shape of the heat exchanger, which is originally a rectangular shape, to a desired shape such as an L-shape and a U-shape. By adequately designing the overall front shape of the heat exchanger, it is possible to arrange the heat exchanger not to interfere with some device or equipment being installed in the vehicle, especially, electric vehicle
(4) The heat exchanger is preferably equipped with a space occupation member such as an internal pipe and a flat board, which is arranged inside of the header to reduce an internal space of the header in which refrigerant flow. By provision of the space occupation member, it is possible to control stagnation of the refrigerant inside of the header. Therefore, it is possible to increase a circulation efficiency of the refrigerant, so it is possible to reduce a start-up time for starting up an initial operation of the air conditioner. In addition, it is possible to reduce an amount of refrigerant which circulate through a refrigerant circulation system of the heat exchanger.
(5) The heat exchanger is designed as a laminated type, which is constructed by assembling together multiple heat-exchanger units, each of which is constructed by a pair of headers as well as tubes and cooling fins and which are interconnected with each other by way of headers. Thus, it is possible to obtain a desired heat-exchange capability while reducing the heat exchanger in volume.

## Claims

1. A heat exchanger for an air conditioner intended for use in a vehicle, said heat exchanger comprising:
a first header (10) and a second header (11) which are extended in a horizontal direction and are arranged in parallel with and apart from each other in a vertical direction,
a third header (17) which is extended in a horizontal direction and is arranged in parallel with and apart from the first header (10) in a vertical direction,
a plurality of primary tubes (12) which extend in a verticale direction between and interconnected with the first and second headers (10,11) to communicate with internal spaces of the first and second headers (10,11) with end portions thereof respectively, said plurality of primary tubes (12) being arranged along the horizontal direction with equal intervals of distance being provided therebetween, and
a plurality of primary cooling fins (13) which extend in a vertical direction between the first and second headers (10,11), said plurality of primary cooling fins (13) being arranged alternately along the horizontal direction such that one primary cooling fin (13) is sandwiched between two primary tubes (12) in the horizontal direction,
a plurality of secondary tubes (12) which extend in the vertical direction between and interconnected with the first header (10) and the third header (17) to communicate with internal spaces of the- first and third headers (10,17) with end portions thereof respectively, said plurality of secondary tubes (12) are arranged along the horizontal direction with equal intervals of distance being provided therebetween;
a plurality of secondary cooling fins (13) which extend in the vertical direction between the first and third headers (10,17), said plurality of secondary cooling fins (13) being arranged alternately along the horizontal direction such that one secondary cooling fin (13) is sandwiched between two secondary tubes (12);
wherein refrigerant is adapted to be introduced into the first header (10) of the heat.exchanger, is adapted to flow through the primary and secondary tubes (12) as well as the first, second and third headers (10,11,17) of the heat exchanger; and is then adapted to be exhausted from the second header (11) of the heat exchanger,
**characterized in that**
the heat exchanger further comprises a plurality of partition plates (16) which are arranged inside the headers (10,11,17) at selected positions, so that the refrigerant circulates through the primary and secondary tubes (12) as well as the first and second and third headers (10,11,17) in a reciprocating manner by being blocked by the partition plates (16).

2. The heat exchanger according to claim 1, wherein the third header (17) is located at an intermediate position in the vertical direction between the first and second headers (10,11), so that the secondary tubes (12) and the secondary cooling fins (13) arranged between the first and third headers (10,17) are shortened in length as compared with the primary tubes (12) and the primary cooling fins (13) arranged between the first and second headers (10,11); and

3. The heat exchanger according to claim 1 or 2, wherein the plurality of partition plates (16) are arranged such that an overall area in which the tubes (12) and the cooling fins (13) are alternately arranged between the first and second and third headers (10,11,17) is divided into a number of sections (PA_{R},PA_{C},PA_{L},PB_{R},PB_{CR},PB_{CL},PB_{L}) so that the refrigerant is adapted to circulate through the tubes (12) between the first and second and third headers (10,11,17) in the reciprocating manner such that the refrigerant flows through the tubes (12) belonging to each section (PA_{R}, PA_{C}, PA_{L}, PB_{R}, PB_{CR}, PB_{CL}, PB_{L}) in a prescribed direction.

4. The heat exchanger according to claim 3, wherein the plurality of partition plates (16) are arranged such that the sections (PA_{R}, PA_{C}, PA_{L}, PB_{R}, PB_{CR}, PB_{CL}, PB_{L}) are gradually reduced in sectional area along the refrigerant flow direction by which the refrigerant flows sequentially from one section (PA_{R}, PA_{C}, PA_{L}, PB_{R}, PB_{CR}, PB_{CL}, PB_{L}) to another.

5. The heat exchanger according to claim 3, wherein the plurality of partition plates (16) are arranged such that the sections (PA_{R}, PA_{C}, PA_{L}, PB_{R}, PB_{CR}, PB_{CL}, PB_{L}) are gradually enlarged in sectional area along the refrigerant flow direction by which the refrigerant flows sequentially from one section (PA_{R}, PA_{C}, PA_{L}, PB_{R}, PB_{CR}, PBC_{L}, PB_{L}) to another.

6. The heat exchanger according to any one of claims 1 to 5, wherein a space occupation member (20;21) is arranged inside the header(s) so as to reduce the volume of an internal space of the header(s) in which the refrigerant flows.

7. The heat exchanger according to claim 6, wherein the space occupation member is formed by an internal pipe (20) which is inserted'into the header.

8. The heat exchanger according to claim 6, wherein the space occupation member is formed by a flat board (21) which is inserted into the header.

9. A heat exchanger unit for an air conditioner intended for use in a vehicle, said heat exchanger unit comprising a plurality of heat-exchangers (A,B) as defined in any one of claims 1 to 8 which are arranged adjacent each other in a laminated manner and assembled together and interconnected with each other such that refrigerant can sequentially pass through all heat exchangers (A,B) of the heat exchanger unit.

## Patentansprüche

1. Wärmetauscher für eine zum Einsatz in einem Fahrzeug vorgesehene Klimaanlage, wobei der Wärmetauscher umfasst:
ein erstes Sammelrohr (10) und ein zweites Sammelrohr (11), die sich in einer Horizontalrichtung erstrecken und parallel zueinander und in einer Vertikalrichtung voneinander beabstandet angeordnet sind,
ein drittes Sammelrohr (17), das sich in einer Horizontalrichtung erstreckt und parallel zu und in einer Vertikalrichtung beabstandet von dem ersten Sammelrohr (10) angeordnet ist,
mehrere Primärrohre (12), die sich in einer Vertikalrichtung zwischen den ersten und zweiten Sammelrohren (10,11) erstrecken und mit diesen verbunden sind, um jeweils an Endabschnitten derselben mit Innenräumen der ersten und zweiten Sammelrohre (10,11) zu kommunizieren, wobei die mehreren Primärrohre (12) entlang der Horizontalrichtung mit zwischen ihnen vorgesehenen gleichen Abstandsintervallen angeordnet sind, und
mehrere Primär-Kühllamellen (13), die sich in einer Vertikalrichtung zwischen den ersten und zweiten Sammelrohren (10,11) erstrecken, wobei die mehreren Primär-Kühllamellen (13) alternierend entlang der Horizontalrichtung derart angeordnet sind, dass eine Primär-Kühllamelle (13) zwischen zwei Primärrohren (12) in der Horizontalrichtung sandwichartig eingefügt ist,
mehrere Sekundärrohre (12), die sich in der Vertikalrichtung zwischen dem ersten Sammelrohr (10) und dem dritten Sammelrohr (17) erstrecken und mit diesen verbunden sind, um jeweils an Endabschnitten derselben mit Innenräumen der ersten und dritten Sammelrohre (10,17) zu kommunizieren, wobei die mehreren Sekundärrohre (12) entlang der Horizontalrichtung mit dazwischen vorgesehenen gleichen Abstandsintervallen angeordnet sind,
mehrere Sekundär-Kühllamellen (13), die sich in der Vertikalrichtung zwischen den ersten und dritten Sammelrohren (10,17) erstrecken, wobei die mehreren Sekundär-Kühllamellen (13) alternierend entlang der Horizontalrichtung derart angeordnet sind, dass eine Sekundär-Kühllamelle (13) zwischen zwei Sekundärrohren (12) sandwichartig eingefügt ist,
wobei Kältemittel in das erste Sammelrohr (10) des Wärmetauschers eingeleitet werden kann, durch die Primär- und Sekundärrohre (12) sowie durch die ersten, zweiten und dritten Sammelrohre (10,11,17) des Wärmetauschers strömen kann und dann von dem zweiten Sammelrohr (11) des Wärmetauschers ausgestoßen werden kann,
**dadurch gekennzeichnet, dass**
der Wärmetauscher ferner mehrere Partitionsplatten (16) umfasst, die innerhalb der Sammelrohre (10,11,17) an ausgewählten Positionen so angeordnet sind, dass das Kältemittel durch die Primär- und Sekundärrohre (12) sowie durch die ersten, zweiten und dritten Sammelrohre (10,11,17) in einer hin- und hergehenden Weise zirkuliert, indem es durch die Partitionsplatten (16) blockiert wird.

2. Wärmetauscher nach Anspruch 1, wobei sich das dritte Sammelrohr (17) an einer Zwischenposition in der Vertikalrichtung zwischen den ersten und zweiten Sammelrohren (10,11) befindet, so dass die Sekundärrohre (12) und die Sekundär-Kühllamellen (13), die zwischen den ersten und dritten Sammelrohren (10,17) angeordnet sind, im Vergleich zu den Primärrohren (12) und den Primär-Kühllamellen (13), die zwischen den ersten und zweiten Sammelrohren (10,11) angeordnet sind, in der Länge verkürzt sind.

3. Wärmetauscher nach Anspruch 1 oder 2, wobei die mehreren Partitionsplatten (16) derart angeordnet sind, dass eine Gesamtfläche bzw. ein Gesamtbereich, in der bzw. dem die Rohre (12) und die Kühllamellen (13) alternierend zwischen den ersten und zweiten und dritten Sammelrohren (10,11,17) angeordnet sind, in eine Anzahl von Abschnitten (PA_{R,}PA_{C},PA_{L},PB_{R},PB_{CR},PB_{CL},PB_{L}) derart unterteilt ist, dass das Kältemittel durch die Rohre (12) zwischen den ersten und zweiten und dritten Sammelrohren (10,11,17) in der hin- und hergehenden Weise so zirkulieren kann, dass das Kältemittel durch die zu jedem Abschnitt (PA_{R},PA_{C},PA_{L},PB_{R},PB_{CR},PB_{CL},PB_{L}) gehörenden Rohre (12) in einer vorgeschriebenen Richtung strömt.

4. Wärmetauscher nach Anspruch 3, wobei die mehreren Partitionsplatten (16) derart angeordnet sind, dass die Abschnitte (PA_{R},PA_{C},PA_{L},PB_{R},PB_{CR},PB_{CL},PB_{L}) in der Querschnittsfläche entlang der Kältemittel-Strömungsrichtung, in der das Kältemittel sequentiell von einem Abschnitt (PA_{R},PA_{C},PA_{L},PB_{R},PB_{CR},PB_{CL},PB_{L}) zu einem anderen strömt, allmählich kleiner werden.

5. Wärmetauscher nach Anspruch 3, wobei die mehreren Partitionsplatten (16) derart angeordnet sind, dass die Abschnitte (PA_{R}, PA_{C}, PA_{L}, PB_{F}, PB_{CR}, PB_{CL}, PB_{L}) in der Querschnittsfläche entlang der Kältemittel-Strömungsrichtung, in der das Kältemittel sequentiell von einem Abschnitt (PA_{R},PA_{C},PA_{L},PB_{R},PB_{CR},PB_{CL},PB_{L}) zu einem anderen strömt, allmählich zunehmen.

6. Wärmetauscher nach einem der Ansprüche 1 bis 5, wobei ein Raumeinnahmeelement (20;21) innerhalb des/der Sammelrohrs bzw. Sammelrohre so angeordnet ist, dass das Volumen eines Innenraums des/der Sammelrohrs bzw. Sammelrohre, in dem/denen das Kältemittel strömt, reduziert wird.

7. Wärmetauscher nach Anspruch 6, wobei das Raumeinnahmemittel durch ein inneres Rohr (20) gebildet ist, das in das Sammelrohr eingefügt ist.

8. Wärmetauscher nach Anspruch 6, wobei das Raumeinnahmeelement durch eine flache Platte (21) gebildet ist, die in das Sammelrohr eingefügt ist.

9. Wärmetauschereinheit für eine zum Einsatz in einem Fahrzeug vorgesehene Klimaanlage, wobei die Wärmetauschereinheit mehrere Wärmetauscher (A,B) umfasst, wie sie in einem der Ansprüche 1 bis 8 definiert sind, und die einander benachbart in geschichteter Weise und derart zusammengebaut und miteinander verbunden sind, dass Kühlmittel sequentiell alle Wärmetauscher (A,B) der Wärmetauschereinheit durchlaufen kann.

## Revendications

1. Échangeur de chaleur pour un conditionneur d'air destiné à être utilisé dans un véhicule, l'échangeur de chaleur comprenant :
un premier collecteur (10) et un deuxième collecteur (11) qui s'étendent dans une direction horizontale et qui sont parallèles entre eux en étant à distance dans une direction verticale ;
un troisième collecteur (17) qui s'étend dans une direction horizontale et qui est parallèle au premier collecteur (10) et à distance de celui-ci dans une direction verticale ;
une pluralité de tubes (12) primaires qui s'étendent dans une direction verticale entre les premier et deuxième collecteurs (10) et qui communiquent avec eux pour communiquer avec des espaces intérieurs des premier et deuxième collecteurs (10, 11) par leurs parties d'extrémité, respectivement, la pluralité de tubes (12) primaires étant disposés dans la direction horizontale avec des intervalles égaux entre eux ; et
une pluralité d'ailettes (13) primaires de refroidissement qui s'étendent dans une direction verticale entre les premier et deuxième collecteurs (10, 11), la pluralité d'ailettes (13) primaires de refroidissement étant disposées en alternance le long de la direction horizontale de façon qu'une ailette (13) primaire de refroidissement soit prise en sandwich entre deux tubes (12) primaires dans la direction horizontale ;
une pluralité de tubes (12) secondaires qui s'étendent dans la direction verticale entre le premier collecteur (10) et le troisième collecteur (17) et qui communiquent avec eux pour communiquer avec des espaces intérieurs des premier et troisième collecteurs (10, 17) par leurs parties d'extrémité, respectivement, la pluralité de tubes (12) secondaires étant disposés dans la direction horizontale avec des intervalles égaux entre eux ;
une pluralité d'ailettes (13) secondaires de refroidissement qui s'étendent dans la direction verticale entre les premier et troisième collecteurs (10, 17), la pluralité d'ailettes (13) secondaires de refroidissement étant disposées en alternance dans la direction horizontale de façon à ce qu'une ailette (13) secondaire de refroidissement soit prise en sandwich entre deux tubes (12) secondaires ;
du fluide de refroidissement étant apte à être introduit dans le premier collecteur (10) de l'échangeur de chaleur, étant apte à passer dans les tubes (12) primaires et secondaires ainsi que dans les premier, deuxième et troisième collecteurs (10, 11, 17) de l'échangeur de chaleur et étant ensuite apte à être évacué du deuxième collecteur (11) de l'échangeur de chaleur,
**caractérisé en ce que**
l'échangeur de chaleur comprend en outre une pluralité de plaques (16) de séparation qui sont disposées à l'intérieur des collecteurs (10, 11, 17) dans des positions sélectionnées de sorte que le fluide de refroidissement circule dans les tubes (12) primaires et secondaires ainsi que dans les premier et deuxième et troisième collecteurs (10, 11, 17) de manière inverse en étant bloqué par les plaques (16) de séparation.

2. Échangeur de chaleur suivant la revendication 1, dans lequel le troisième collecteur (17) est placé en une position intermédiaire dans la direction verticale entre les premier et deuxième collecteur (10, 11) de sorte que les tubes (12) secondaires et les ailettes (13) secondaires de refroidissement disposés entre les premier et troisième collecteurs (10, 17) sont raccourcis en longueur par rapport aux tubes (12) primaires et aux ailettes (13) primaires de refroidissement disposés entre les premier et deuxième collecteur (10, 11).

3. Échangeur de chaleur suivant la revendication 1 ou 2, dans lequel la pluralité de plaques (16) de séparation sont disposées de façon à ce qu'une zone globale dans laquelle les tubes (12) et les ailettes (13) de refroidissement sont disposés en alternance entre les premier et deuxième et troisième collecteurs (10, 11, 17) soient subdivisés en un certain nombre de sections (PA_{R}, PA_{C}, PA_{L}, PB_{R}, PB_{CR}, PB_{CL}, PB_{L}) de sorte que le fluide de refroidissement soit apte à circuler dans les tubes (12) entre les premier et deuxième et troisième collecteurs (10, 11, 17) de manière inverse de façon à ce que le fluide de refroidissement passe dans les tubes (12) appartenant à chaque section (PA_{R}, PA_{C}, PA_{L}, PB_{R}, PB_{CR}, PB_{CL}, PB_{L}) dans une direction prescrite.

4. Échangeur de chaleur suivant la revendication 3, dans lequel la pluralité des plaques (16) de séparation sont disposées de façon à ce que les sections (PA_{R}, PA_{C}, PA_{L}, PB_{R}, PB_{CR}, PB_{CL}, PB_{L}) soient réduites peu à peu en surface de section transversale le long de la direction d'écoulement du fluide de refroidissement suivant laquelle le fluide de refroidissement s'écoule séquentiellement d'une section (PA_{R}, PA_{C}, PA_{L}, PB_{R}, PB_{CR}, PB_{CL}, PB_{L}) à l'autre.

5. Échangeur de chaleur suivant la revendication 3, dans lequel la pluralité des plaques (16) de séparation sont disposées de façon à ce que les sections (PA_{R}, PA_{C}, PA_{L}, PB_{R}, PB_{CR}, PB_{CL}, PB_{L}) soient augmentées peu à peu en surface de section transversale dans la direction d'écoulement du fluide réfrigérant suivant laquelle le fluide réfrigérant s'écoule séquentiellement d'une section (PA_{R}, PA_{C}, PA_{L}, PB_{R}, PB_{CR}, PB_{CL}, PB_{L}) à une autre.

6. Échangeur de chaleur suivant l'une quelconque des revendications 1 à 5, dans lequel un élément (20, 21) d'occupation de l'espace est disposé à l'intérieur du ou des collecteurs de manière à réduire le volume d'un espace intérieur du ou des collecteurs dans lequel s'écoule le fluide de refroidissement.

7. Échangeur de chaleur suivant la revendication 6, dans lequel l'élément d'occupation de l'espace est formé par un conduit (20) intérieur qui est inséré dans le collecteur.

8. Échangeur de chaleur suivant la revendication 6, dans lequel l'élément d'occupation de l'espace est formé par un panneau (21) plat qui est inséré dans le collecteur.

9. Unité d'échangeurs de chaleur pour un conditionneur d'air destinée à être utilisée dans un véhicule, l'unité d'échangeurs de chaleur comprenant une pluralité d'échangeurs de chaleur (A, B) tels que définis à l'une quelconque des revendications 1 à 8 qui sont disposés au voisinage les uns des autres d'une manière stratifiée et assemblés ensemble et interconnectés les uns aux autres de façon à ce que du fluide de refroidissement puisse passer séquentiellement dans tous les échangeurs de chaleur (A, B) de l'unité d'échangeurs de chaleur.
